Europäisches Patentamt

European Patent Office

Office européen des brevets

(11) Publication number: **0 506 024 A2**

# EUROPEAN PATENT APPLICATION

(21) Application number: **92105151.2**

(22) Date of filing: **25.03.92**

(51) Int. Cl.⁵: **G01N 35/00, G05B 15/00**

(30) Priority: **26.03.91 JP 61670/91**

(43) Date of publication of application:
**30.09.92 Bulletin 92/40**

(84) Designated Contracting States:
**DE**

(71) Applicant: **Kabushiki Kaisha Toshiba**
**72, Horikawa-cho Saiwai-ku**
**Kawasaki-shi(JP)**

(72) Inventor: **Shinohara, Hiroo**
**70-32, Higashimishima 4-Chome,**
**Nishinasuno-Machi**
**Nasu-Gun, Tochigi-Ken(JP)**
Inventor: **Takiguchi, Toshio**
**1-11-2-302, Sekiguchi, Bunkyo-Ku**
**Tokyo, Tochigi-Ken(JP)**

(74) Representative: **Blumbach Weser Bergen**
**Kramer Zwirner Hoffmann Patentanwälte**
**Radeckestrasse 43**
**W-8000 München 60(DE)**

(54) **Automatic chemical analysis system and automatic chemical analysis method.**

(57) An automatic chemical analysis is performed, in which a sample to be analyzed is reacted with a reagent to measure a concentration of a specific composition in a mixed reaction solution. An information necessary for an initial operation for a measurement of the concentation is first set, the initial operation for preparation of a measurement process before starting of the measurement is executed in accordance with the set information, an elapsing time required for the measurement process is measured and set, the elapsing time is discriminated as to whether or not the elapsing time is within a preset time, and a content of the initial operation is controlled to be changed in response to a result of the discrimination. The discrimination is carried out in accordance with a present time $(Tn)$, an operation termination time $(Te)$ of each of units constituting the analysis sytem and an operation elapsing time $(Ts)$ preliminarily set to each of the units. When the time $(Te - Tn) >$ the time $(Ts)$, a minimumly necessary initial operation is performed, and when the time $(Te - Tn) <$ the time $(Ts)$, an additional operation in addition to the minimumly necessary initial operation is performed.

## BACKGROUND OF THE INVENTION

The present invention relates to an automatic chemical analysis system and method for presetting an initial operation condition for preparation for a measuring operation and performing the initial operation.

There is known an automatic chemical analysis system in which, for example, blood serum taken from a human body is used as a sample, the sample is reacted with a desired reagent and a concentration of a specific component of the reacted solution is measured by, e.g., a colorimetric method to thereby analyze a desired item such as total protein (TP), uric acid (UA), neutral fat (TG) and the like.

An automatic chemical analysis system generally comprises an analyzing unit and a data processing unit. The analyzing unit includes a sample setting unit, so-called a sampler, generally having a circular configuration and being rotatable, in which a plurality of sample vessels containing samples to be analyzed are set, a reagent seting means for supplying a reagent as occasion demands and a measuring or analyzing unit including a constant temperature container and an agitation means, for example. A dilution unit may be also disposed as occasion demands. In such the analysis system, these units or means are arranged on a table, for example, of the analyzing unit. A cleaning means is also disposed in the vicinity of the sample analyzing unit.

The data processing unit includes an overall control unit as a central processing unit (CPU) provided with a display means or a printer. The data from or to the respective means are controlled by this data processing unit.

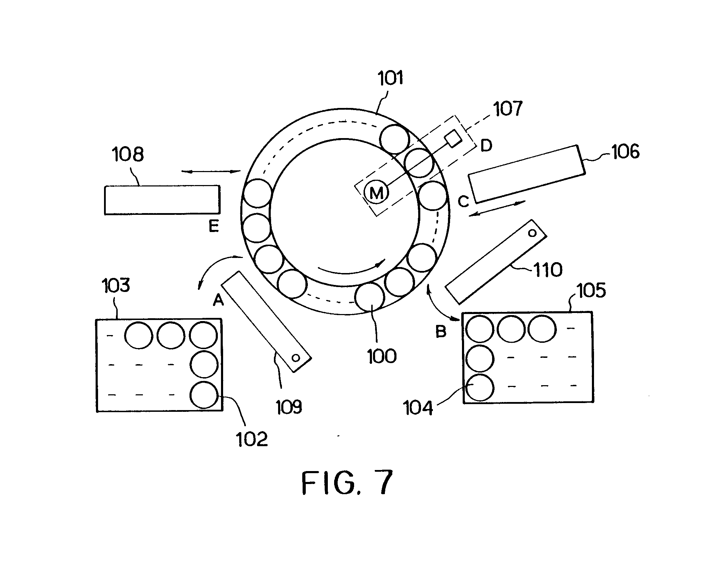

Fig. 7 shows an example of an arrangement of the analysing unit of the structure described above, wherein a plurality of reaction vessels 100 are disposed, for example, in a circular constant temperature container 101 and intermittently moved in an arrowed direction by a drive source at a predetermined cycle.

A sample storage unit 103 as a sampler or sample setting unit, in which a plurality of sample vessels 102 each containing a sample to be analyzed, is disposed at a position A around the container 101 and any arbitrary sample can be sucked by a sample supply nozzle 109 and supplied to the reaction vessel 100 positioned in confrontation therewith. Further, a reagent storage unit 105, in which a plurality of reagent vessels 104 each containing a reagent to be reacted with a sample for analyzing a specific item thereof, is disposed at a position B and any arbitrary reagent can be sucked by a reagent supply nozzle 110 and supplied to the reaction vessel 100 positioned in confrontation therewith.

Similarly, a stirrer 106 for stirring a reacted solution in the reaction vessel 100 is disposed at a position C, a light measurement unit 107 for measuring a reacted solution in the reaction vessel 100 moved intermittently by a colorimetric method is disposed at a position D, and a cleaning unit 108 for cleaning the reaction vessel 100 to which a measurement has been carried out is disposed at a position E.

In such arrangement of the conventional chemical analysis system, a sample to be analyzed is sucked from the sample vessel 102 by the sample supply nozzle 109 and supplied to the reaction vessel 100 at the position A in the state that the reaction vessel 100 is stopped, and a desired reagent to be reacted with the above sample is sucked from the reagent vessel 104 by the sample supply nozzle 110 and supplied to the reaction vessel 100 at the position B. Further, the reaction vessel 100 at the position C is stirred by the stirrer 106 and then the reaction vessel 100 at the position D is measured by the measurement unit 107 to analyze a desired item. Further, the reaction vessel 100 to which a measurement has been carried out is cleaned by the cleaning unit 108 at the position E, and thereafter, moved to the position A so that it is repeatedly subjected to a series of the operations as described above.

Incidentally, this automatic chemical analysis system needs an initial operation for preparation for the above measuring operation, prior to the start of the actual measuring operation. The initial operation means such operations as those for moving the operation units such as the above sample supply nozzle 109 and reagent supply nozzle 110 to regulated positions so that a predetermined measuring operation can be carried out and to introduce medium liquids such as reagents and cleaning solution necessary for the measuring operation to the regulated positions, and the like.

The content of the initial operation is predetermined prior to the initiation of the measurement and the initial operation is carried out on the basis of the predetermined content. The operation for introducing the above medium liquids to the regulated position is determined to have a content by which the measuring operation is not obstructed by taking the deteriorating characteristics of the reagents and the level lowering characteristics of the cleaning agent into consideration.

By the way, the conventional automatic chemical analysis system has a problem that although the operation for moving the operation units to the regulated position is essential in the initial operation, the operation for introducing the medium liquids to the regulated position will waste solutions and time, depending upon the conditions of the measuring operation.

For example, a case, in which the measuring operation is repeated several times at intervals and the intervals have different periods of time, will be considered with respect to a reagent as an example. If the intervals have a short period of time, the reagent can be used several times because it is not deteriorated, whereas when the intervals have a long period of time, the reagent cannot be used several times because it is deteriorated. To cope with this problem, how many times a reagent is to be disposed in the midway of measurement is conventionally determined to cover the intervals having a long period of time by taking the worst conditions into consideration, and thus, there may cause a case where even a reagent which can be intrinsically used is disposed and wasted.

It may be possible in this case that a solution detection sensor is provided to check whether or not each reagent is effective according to the period of the intervals, this countermeasure is difficult to be performed because a maintenance of the sensor is necessary for preventing the sensor from being contaminated due to the nature of a solution. Further, an increase in cost involved by the provision of the sensor cannot be avoided. Further, although it may be contemplated that an operator determines whether or not each reagent is effective by observing it, this method imposes a burden on the operator and prevents the operator from being entirely devoted in an original measuring job.

In addition, since the initial operation is set taking the worst conditions into consideration in this case, a time is necessary before a measuring operation is initiated.

## SUMMARY OF THE INVENTION

An object of the present invention is to substantially eliminate defects or drawbacks encounted in the prior art and to provide an automatic chemical analysis sytem and method capable of automatically changing the content of a predetermined initial operation in accordance with the elapsing of time for the execution of the measurement operation.

This and other objects can be achieved according to the present invention, in one aspect, by providing an automatic chemical analysis sytem in which a sample to be analyzed is reacted with a reagent to measure a concentration of a specific composition in a mixed reaction solution, comprising:

a unit for executing an initial operation for preparation of a measurement process before starting of the measurement;

a time setting unit for measuring and setting an elapsing time required for the measurement process; and

a control unit for controlling the executing unit for changing content of the initial operation in response to the elapsing time.

In more detail, there is provided an automatic chemical analysis system in which a sample to be analyzed is reacted with a reagent to measure a consentration of a specific composition of a mixed reaction solution, comprising:

a sample setting unit into which a plurality of sample vessels each in which a sample to be analyzed is contained;

a reagent unit in which a reagent is mixed with the sample from the sample setting unit;

a reaction unit in which the sample is reacted with the reagent;

a cleaning unit for cleaning the units and elements included in the units;

a central control means operatively connected to the sample setting unit, the reagent unit, the reaction unit and the cleaning unit for controlling measurement processes thereof;

an input unit for inputting necessary information for excecution of the measurement processes to the central control means;

a time setting unit for measuring and setting an elapsing time required for the measurement processes; and

an output unit for outputting a result from the central control means.

In a preferred embodiment, the control means controls the executing unit in accordance with a present time (Tn) obtained from the time setting unit, an operation termination time (Te) of each of units constituting the analysis sytem and an operation elapsing time (Ts) preliminarily set to each of the units. When the time (Te - Tn) > the time (Ts), the control means instructs to the executing unit to perform a minimumly necessary initial operation, and when the time (Te - Tn) < the time (Ts), the control means instructs to the execution unit to perform an additional operation in addition to the minimumly necessary initial operation.

The central control means includes a main control means operatively connected to the input unit and the time setting unit, an operation control means opertively connected to the main control means, the sample setting unit, the reagent unit, the reaction unit, and the cleaning unit, a memory means connected to the main control means, and a calculation means operatively connected to the main control means and the output unit. The operation control means may be comprised of an interface means.

In another aspect, there is provided an automatic chemical analysis method performed by an automatic chemical analysis system in which a sample to be analyzed is reacted with a reagent to measure a concentration of a specific composition in a mixed reaction solution, comprising the steps of:

setting an information necessary for an initial operation for a measurement of the concentation;

executing the initial operation for preparation of a measurement process before starting of the measurement in accordance with the set information;

measuring and setting an elapsing time required for the measurement process; and

discriminating the elapsing time whether or not the elapsing time is within a preset time;

controlling a changing of a content of the initial operation in response to a result of the discrimination.

In a preferred embodiment, the discrimination is carried out in accordance with a present time (Tn), an operation termination time (Te) of each of units constituting the analysis sytem and an operation elapsing time (Ts) preliminarily set to each of the units. When the time (Te - Tn) > the time (Ts), a minimumly necessary initial operation is performed, and when the time (Te - Tn) < the time (T)s, an additional operation in addition to the minimumly necessary initial operation is performed.

According to the present invention of the characters described above, when the measurement operation is repeated several times at intervals, a time elapsed from a preset time to a time at which the measurement operation is scheduled to be initiated is calculated prior to the start of the measurement operation, the content of the initial operation is automatically changed in accordance with the length of the elapsed time and the measurement operation is initiated after the execution of the initial operation. With this arrangement, a time necessary prior to the start of measurement can be shortened and the waste of medium liquids such as a reagent, cleaning liquid and the like can be alleviated.

## BRIEF DESCRIPTION OF THE DRAWINGS

In the accompanying drawings:

Fig. 1 is a schematic plan view of an automatic chemical analysis system of general structure to which the present invention is applied;

Fig. 2 is a block diagram showing an embodiment of an automatic chemical analysis system according to the present invention.

Fig. 3 is a view showing an arrangement of an example of a reagent unit used in the present system.

Fig.4 is a view showing an arrangement of an example of a cleaning unit used in the analysis system of the present embodiment.

Figs. 5 and 6 are flowcharts representing the operations of the present embodiment, and

Fig. 7 is an illustration for an arrangement of an automatic chemical analysis system of a general structure.

## DESCRIPTION OF THE PREFERRED EMBODIMENT

An embodiment of the present invention will be described below with reference to drawings.

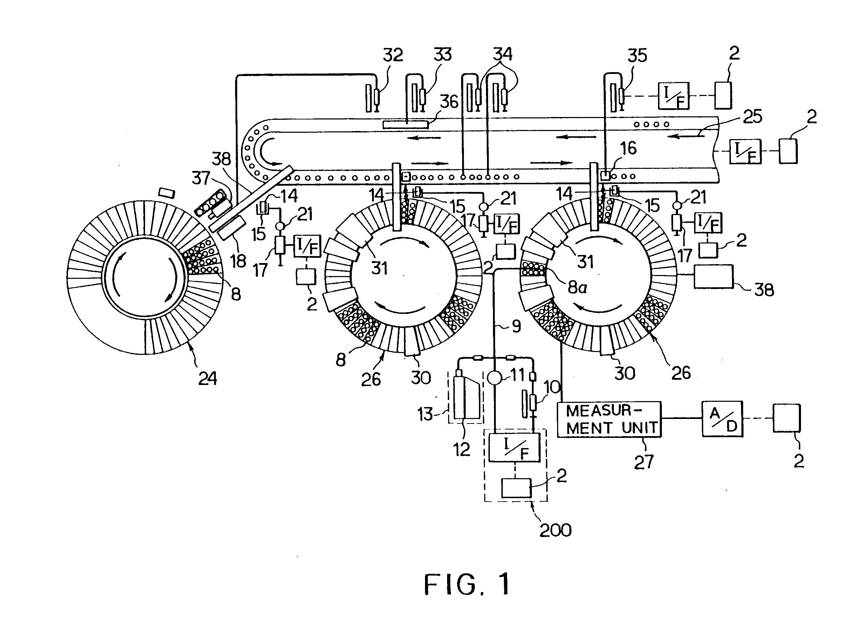

Fig. 1 is a schematic plan view of one example of an automatic chemical analysis system to which the present invention is applicable. The system generally comprises a sample setting unit as a sampler 24 into which a plurality of sample vessels 8 such as test tubes are accommodated, the sampler 24 having a circular outer conture and being rotatable in arrowed directions, at least one reaction unit 26, two in the illustration, in which the sample fed from the sampler 24 is reacted, and a control unit 200 such as central processing unit (CPU) operatively connected to these units. The system may further includes a dilution line 25 for diluting the sample as occasion dimands. The system further includes a reagent setting unit 5 for supplying a reagent into a sample vessel 8a in the reaction unit 26, cleaning units for cleaning a sample suction probe, a reagent supply nozzle and the like at various operation stages, and a measurement unit 27, for example, utilizing light means.

Solutions or liquids such as treated in the reagent setting unit, the dilution line, the cleaning unit and the like are supplied or discharged by means of pump means which are operatively connected to the CPU 200 including a control unit 2 and an operation control unit 4 as interface means I/F.

In Fig. 1, the reaction unit 26 includes a stirrer 30 and a cleaning means 31, and a constant temperature means 38 for maintaining a constant temperature is connected or incorporated to the reaction unit 26. The sample is supplied into the sample vessel 8 through a sample supply nozzle 18 and then sucked by a predetermined amount by a sampling arm 38 provided with a sample suction probe. This operation is monitored by a sensor 37. Further, in Fig. 1, reference numeral 32 denotes a sampling pump, 33 denotes a cleaning pump, 34 denotes a buffer pump and 35 denotes a sample supply pump. These pump means are operatively connected to the control unit 2 through interface means as conveniently shown only with respect to the sample supply pump 35.

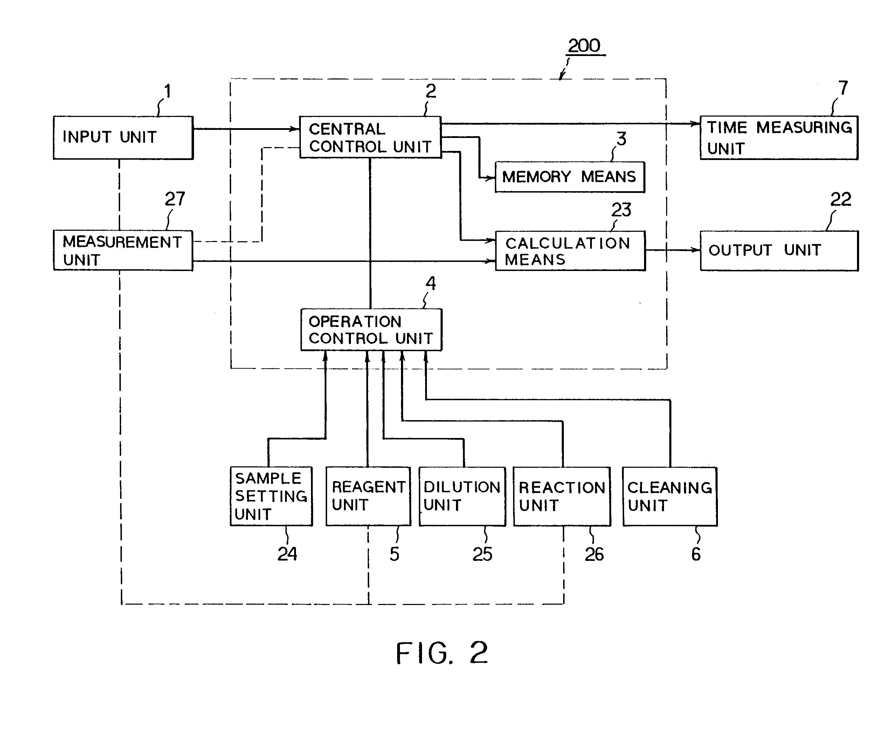

Fig. 2 is a block diagram showing the automatic chemical analysis system of Fig. 1 as a block.

With reference to Fig. 2, the construction of the system will be further understood, and referring to Fig. 2, the system comprises a CPU 200, an input unit 1 such as keyboard for inputting information or data into the CPU, and an output unit 22 such as display means or printer, and the system further comprises the sampler 24, the reagent setting unit 5, the reaction unit 26, the cleaning unit 6, the measurement unit 27, and a time measuring and setting means 7 connected to the CPU 200. The CPU 200 includes a control unit 2 connected to the input unit 2, an operation control unit 4 as interface means, for example, which is operatively connected to other units or means described above, a memory unit 3 and an operating or calculation means 23.

Frther in detail, with reference to Fig. 2, the input unit 1 is for inputting conditions and data necessaary for performing a measuring operation and initial operation. The input information is inputted to the control unit 2 and the necessary information thereof is stored in the memory unit 3. The operation control unit 4 controls the reagent unit 5, a cleaning unit 6 and other units in response to commands from the control unit 2.

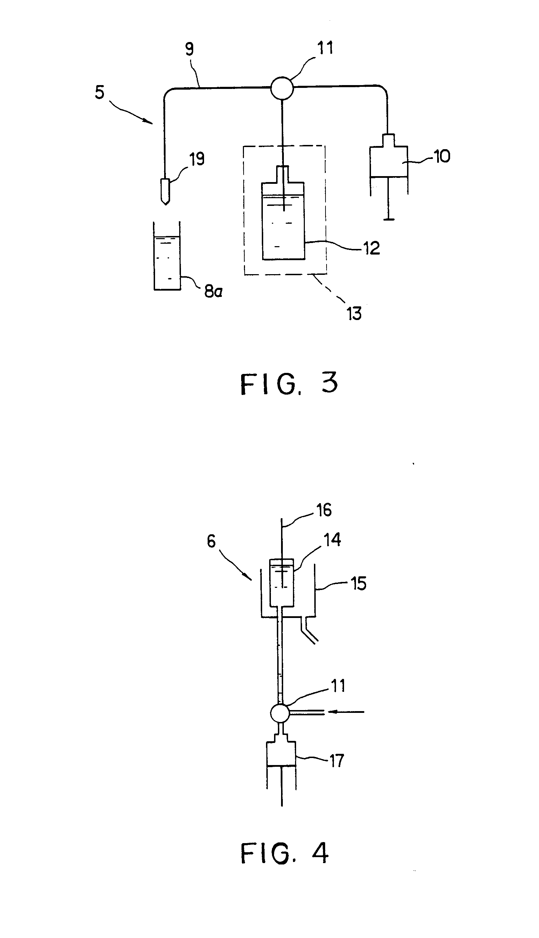

Fig. 3 shows an arrangement of the reagent unit 5 by way of example composed of a reagent supply nozzle 19 for supplying a reagent to a reaction vessel 8a containing a sample reacting therewith, a reagent tube 9 connected to the nozzle 19 at one end thereof, a reagent pump 10 connected to other end of the reagent tube 9, an electromagnetic valve 11 incorporated to the reagent tube 9 adapted to supply the reagent, and a reagent bottle 12 stored in a refrigerator 13, for example. When the reagent pump 10 is operated to suck the reagent in the state that the electromagnetic valve 11 is opened, the reagent is sucked from the reagent bottle 12, and when the reagent pump 10 is operated to discharge the reagent after the electromagnetic valve 11 has been closed, the sucked reagent is supplied to the reaction vessel 8a from the reagent supply nozzle 19 through the reagent tube 9.

Further, Fig. 4 shows an arrangement of the cleaning unit 6 by way of example composed of a cleaning bath 14 containing a cleaning liquid such as pure water or the like, a liquid discharge bath 15 in which the cleaning bath 14 is disposed, a probe 16 having one end immersed into the cleaning bath, a cleaning pump 17 for suking the pure water, and electromagnetic valve 21 for the pure water. When the cleaning pump 17 is operated to suck the pure water in the state that the electromagnetic valve 21 is opened, the pure water is sucked as shown by an arrow, and when the cleaning pump 17 is operated to discharge the pure water after the electromagnetic valve 21 has been closed, the sucked pure water is replenished to the cleaning bath 14.

Referring to Fig. 2, the time measuring and setting means 7 counts a present time which is inputted to the control unit 2 at all times. With this arrangement, the control unit 2 manages when, how long and what kind of operation each unit carries out at all times and stores this information to the memory unit 3. Further, when a measuring operation is repeated several times at intervals, the control unit 2 detects the start of the operation of the reagent unit 5 and cleaning unit 6 in each measureing operation through the oepration control unit 4, reads out the time at the start of the operation from the time measuring and setting means 7, and stores the same to the memory unit 3 each time the measuring operation is carried out.

The operation of the present embodiment will be described hereunder.

It is assumed that a series of a measuring operation has been completed by the final operation of the reagent unit 5 terminated at 10:50 and the final operation of the cleaning unit 6 terminated at 11:10. It is also assumed that a reagent used in the reagent unit 5 is deteriorated in 3 hours in the state that it is sucked in the sample tube 9 and that the level of a cleaning liquid in the cleaning unit 6 is lowered in 4 hours due to evaporation, gravity and the like.

When a measuring operation to be performed next time is started at 13:00, 14:00 and 16:00, respectively, under the above conditions, each case of the operations will be described below.

(1) In the Case of 13:00

2 hours and 10 minutes and 1 hour and 50 minutes have passed from the termination of the previous operation of the reagent unit 5 and cleaning unit 6, respectively, and these periods of time are within the above allowable periods of time of 3 hours and 4 hours, and thus no problem arises. Therefore, the measuring operation is started at once without the need for a special initial operation.

More specifically, when the time at which the previous measuring operation is terminated is taken as a reference, since the time elapsed from the termination of the previous measuring operation to the start of the next measuring operation is short in this case, an initial operation is carried out only to move the operation units to the regulated positions such as represented by the positions A to E in Fig. 7, and medium liquids need not be moved.

(2) In the case of 14:00

The next operations of the reagent unit 5 and cleaning unit 6 are started in 3 hours and 10 minutes and 2 hours and 50 minutes from the termination of the previous operations, respectively, and thus there is a possibility that the reagent may be deteriorated because it is left for a time exceeding the allowable time of 3 hours, whereas the cleaning liquid has no problem because it can be used within the alowable time. Therefore, in this case, the initial operation additionally carries out an operation under the control of the control unit 2. Thereafter, a measuring operation is started.

(3) In the Case of 16:00

The next operations of the reagent unit 5 and cleaning unit 6 are started in 5 hours and 10 minutes and 4 hours and 50 minutes from the termination of the previous operations, respectively, and thus both of these periods of time exceed the above allowable times. Therefore, there is a possibility that the reagent may be deteriorated and it is also considered that the level of the cleaning liquid may be lowered below a regulated level. Therefore, in this case, the initial operation additionally carries out an operation for replacing the reagent and several times of preparatory operations for sucking a cleaning liquid for replenishment, and thereafter, a measuring operation is started. The above operations are automatically carried out in the same way as the above case.

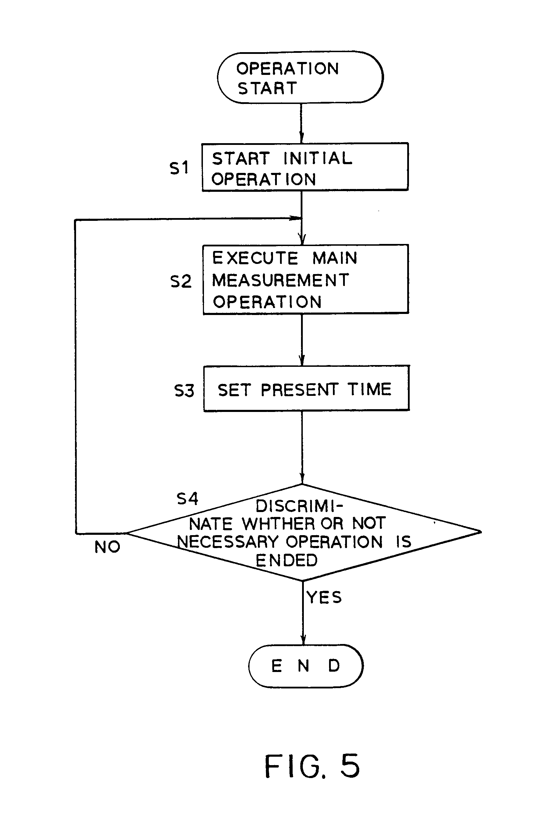

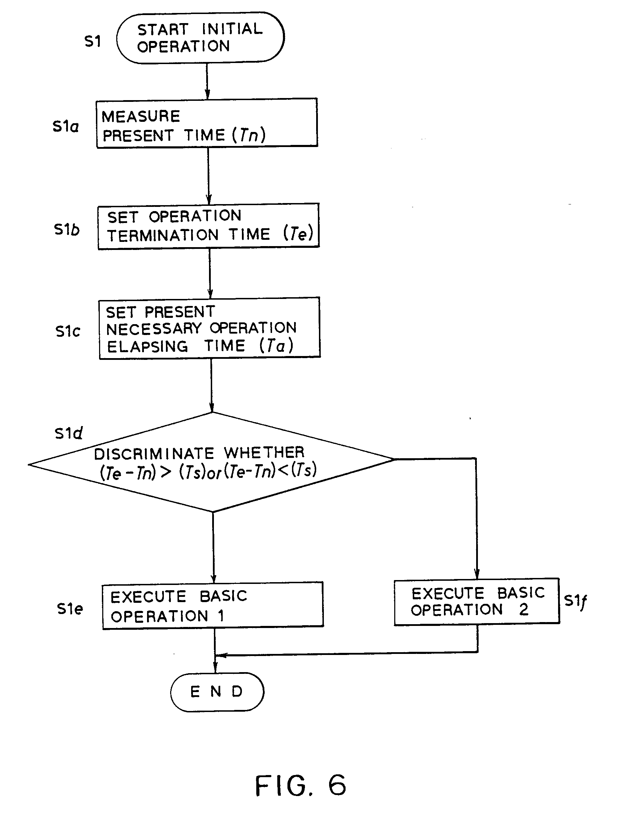

The operation of the present embodiment will be described more concretely hereunder with reference to flowcharts of Figs. 5 and 6.

Referring first to Fig. 5, an operation such as measuring, cleaning or maintenance operation is instructed to be started and in accordance with this instruction, an initial operation is started in step S1, which will be described in detail hereinlatter with reference to Fig. 6. In the next step S2, the main process such as for the above operation is performed. In step S3, present time of every unit or means for executing the respective operations such as cleaning unit, pump means, measuring means or the like is measured by the time measuring and setting means 7 and the measured time is set and stored in the memory unit 3 of the CPU 200. After certain time elapses, it is discriminated whether or not the required operation is completed in step S4. In the case of NO, the process returns to the step S2, and in the case of YES, the operation is ended.

Next, referring to Fig. 6, according to the instruction of the initial operation of the step S1, the present time (Tn) is first obtained from the time measuring means 7 in step S1a and the final operation termination times (Te) of the respective units and means are then obtained in step S1b. In the next step S1c, infomations regarding preliminarily set operation elapsing times (Ts) of the respective units and means are taken out. In the next step S1d, it is discriminated whether $(Te - Tn) > (Ts)$ --- (1) or $(Te - Tn) < (Ts)$ --- (2). In the case of (1), an instruction is made to carry out a basic operation 1 being the minimumly necessary initial opertion, in step S1e, whereas in the case of (2), an instruction is made to carry out a basic operation 2, in step S1f, in which, in addition to the basic operation 1, an operation such as for replacing the reagent or making up the liquid such as water is performed for the preparation of performing of the correct operations. After these steps in the step S1 are ended, the instruction for performing the step S2 is given.

In these steps, it may be possible to increase the basic operations more than two by taking into consideration of the checking of the discrimination time difference.

As described above, according to the present invention, when a measuring operation is repeated several times, a time elapsed from the time at which a previous measuring operation is terminated to the time at which a next measuring operation is started is calculated prior to the start of the next measuring operation and the content of an initial operation is automatically changed in accordance with the length of the elapsed time before the measuting operation is started, whereby a time necessary for the initial operation can be shortened and a measurement can be started at once upon receiving a measurement start command. Further, when the above elapsed time is short and medium liquids such as a reagent are less wasted.

Further, since a liquid detection sensor is not needed, cost is not increased, and an operator can be entirely devoted in an original measuring job because he is released from a job for determining the content of the initial operation.

## Claims

1. An automatic chemical analysis sytem in which a sample to be analyzed is reacted with a reagent to measure a concentration of a specific composition in a mixed reaction solution, comprising:

   means for executing an initial operation for preparation of a measurement process before starting of the measurement;

   a time setting means for measuring and setting an elapsing time required for the measurement process; and

   a control means for controlling the executing means for changing content of the initial operation in response to the elapsing time.

2. An automatic chemical analysis system according to claim 1, wherein said control means controls the executing means in accordance with a present time (Tn) obtained from the time setting means, an operation termination time (Te) of each of units constituting the analysis

system and an operation elapsing time (Ts) preliminarily set to each of the units.

3. An automatic chemical analysis system according to claim 2, wherein when the time (Te - Tn) > the time (Ts), the control means instructs to the executing means to perform a minimumly necessary initial operation, and when the time (Te - Tn) < the time (Ts), the control means instructs to the execution means to perform an additional operation in addition to the minimumly necessary initial operation.

4. An sutomatic chemical analysis system according to claim 3, wherein the additional operation includes change of a reagent or makeup of water.

5. An automatic chemical analysis system in which a sample to be analyzed is reacted with a reagent to measure a consentration of a specific composition of a mixed reaction solution, comprising:
    a sample setting unit into which a plurality of sample vessels each in which a sample to be analyzed is contained;
    a reagent unit in which a reagent is mixed with the sample from the sample setting unit;
    a reaction unit in which the sample is reacted with the reagent;
    a cleaning unit for cleaning the units and elements included in the units;
    a central control means operatively connected to the sample setting unit, the reagent unit, the reaction unit and the cleaning unit for controlling measurement processes thereof;
    an input unit for inputting necessary information for excecution of the measurement processes to the central control means;
    a time setting unit for measuring and setting an elapsing time required for the measurement processes; and
    an output unit for outputting a result from the central control means.

6. An automatic chemical analysis system according to claim 5, wherein the central control means includes a main control means operatively connected to the input unit and the time setting unit, an operation control means operatively connected to the main control means, the sample setting unit, the reagent unit, the reaction unit, and the cleaning unit, a memory means connected to the main control means, and a calculation means operatively connected to the main control means and the output unit.

7. An automatic chemical analysis sytem according to claim 6, wherein the operation control means is an interface means.

8. An automatic chemical analysis system according to claim 6, wherein said control means controls the executing means in accordance with a present time (Tn) obtained from the time setting means, an operation termination time (Te) of each of units constituting the analysis sytem and an operation elapsing time (Ts) preliminarily set to each of the units.

9. An automatic chemical analysis system according to claim 8, wherein when the time (Te - Tn) > the time (Ts), the control means instructs to the executing means to perform a minimumly necessary initial operation, and when the time (Te - Tn) < the time (Ts), the control means instructs to the execution means to perform an additional operation in addition to the minimumly necessary initial operation.

10. An automatic chemical analysis method performed by an automatic chemical analysis system in which a sample to be analyzed is reacted with a reagent to measure a concentration of a specific composition in a mixed reaction solution, comprising the steps of:
    setting an information necessary for an initial operation for a measurement of the concentation;
    executing the initial operation for preparation of a measurement process before starting of the measurement in accordance with the set information;
    measuring and setting an elapsing time required for the measurement process;
    discriminating the elapsing time whether or not the elapsing time is within a preset time; and
    controlling a changing of a content of the initial operation in response to a result of the discrimination.

11. An automatic chemical analysis method according to claim 10, wherein the discrimination is carried out in accordance with a present time (Tn), an operation termination time (Te) of each of units constituting the analysis sytem and an operation elapsing time (Ts) preliminarily set to each of the units.

12. An automatic chemical analysis method according to claim 10, wherein when the time (Te - Tn) > the time (Ts), a minimumly necessary initial operation is performed, and when the time (Te - Tn) < the time (Ts), an additional operation in addition to the minimumly necessary initial operation is performed.

FIG. 1

FIG. 2

FIG. 3

FIG. 4

```
        ┌─────────────────┐
        │   OPERATION     │
        │     START       │
        └─────────────────┘
                 │
                 ▼
      ┌──────────────────────┐
  S1  │ START  INITIAL       │
      │ OPERATION            │
      └──────────────────────┘
                 │
                 ▼
      ┌──────────────────────┐
      │ EXECUTE  MAIN        │
  S2  │ MEASUREMENT          │
      │ OPERATION            │
      └──────────────────────┘
                 │
                 ▼
      ┌──────────────────────┐
  S3  │ SET  PRESENT  TIME   │
      └──────────────────────┘
                 │
                 ▼
           ╱────────────╲
  S4      ╱ DISCRIMI-    ╲
    NO   ╱ NATE WHTHER OR NOT╲
  ◄──────  NECESSARY OPERATION IS
         ╲    ENDED      ╱
          ╲────────────╱
                 │ YES
                 ▼
          ┌──────────────┐
          │   E N D      │
          └──────────────┘
```

FIG. 5

FIG. 6

FIG. 7